# EUROPÄISCHE PATENTSCHRIFT

(11) **EP 3 695 140 B1**
(45) Veröffentlichungstag und Bekanntmachung des Hinweises auf die Patenterteilung: **01.09.2021**
(21) Anmeldenummer: 18788693.2
(22) Anmeldetag: 08.10.2018
(51) Int. Cl.: F16G 13/16

(54) **LEITUNGSFÜHRUNGSSYSTEM UND FÜHRUNGSRINNE, INSBESONDERE FÜR HOHE VERFAHRGESCHWINDIGKEITEN**
LINE GUIDANCE SYSTEM AND GUIDE CHANNEL, PARTICULARLY FOR HIGH TRAVERSE SPEEDS
SYSTÈME DE GUIDAGE DE LIGNE ET GOULOTTE DE GUIDAGE, EN PARTICULIER POUR VITESSES DE DÉPLACEMENT ÉLEVÉES

(30) Priorität: 09.10.2017 DE 202017106108 U
(43) Veröffentlichungstag der Anmeldung: 19.08.2020
(73) Patentinhaber: Igus GmbH, 51147 Köln (DE)
(72) Erfinder: HERMEY, Andreas, 53773 Hennef (DE); JAEKER, Thilo-Alexander, 53757 Sankt Augustin (DE)
(74) Vertreter: Lippert Stachow Patentanwälte Rechtsanwälte
(86) Internationale Anmeldenummer: PCT/EP2018/077357
(87) Internationale Veröffentlichungsnummer: WO 2019/072777

(56) Entgegenhaltungen:
- EP-A1- 1 705 770

## Beschreibung

Die Erfindung betrifft allgemein ein Leitungsführungssystem für mindestens eine Versorgungsleitung, umfassend eine Energieführung zur dynamischen Führung einer Leitung, mit einer Vielzahl Gliedern, die jeweils gelenkig miteinander verbunden sind, sowie eine Führungsrinne mit zwei seitlich gegenüberliegenden Seitenwänden und dazwischen einem Rinnenboden, in welcher die Energieführung zumindest teilweise aufgenommen und entlang einer bestimmungsgemäßen Laufbahn geführt werden kann. Die Erfindung betrifft insbesondere den Aufbau einer solchen Führungsrinne.

Die Erfindung betrifft ein solches Leitungsführungssystem und eine solche Führungsrinne, die hohe Verfahrgeschwindigkeiten und/oder lange Fahrwege der Energieführung ermöglichen.

Eine Energieführung ist typisch unter Ausbildung eines ersten Trums, eines zweiten Trums sowie eines Umlenkbogens, welcher beide Trume verbindet, hin und her verfahrbar ist. Der Begriff Energieführung bedeutet für die vorliegende Anmeldung im weiteren Sinne jegliche aktive Leitungsführungseinrichtung, nicht nur eine Energieführungskette als eigentliche Gliederkette aus einzelnen Gliedern, sondern z.B. auch Bandführungen, bei denen Glieder bzw. Bandsegmente über ein biegsames Band miteinander verbunden sind, oder andere in mindestens einer Ebene abwinkelbare Einrichtungen zur Aufnahme und Führung von Leitungen zwischen zwei Anschlussstellen, von denen mindestens eine zur anderen relativbeweglich ist.

Aus weiter unten ersichtlichen Gründen sollte bei der gattungsgemäßen Energieführung mindestens ein Teil der Glieder jeweils mindestens ein stabiles, laschenartiges Seitenteil aufweisen mit einer inneren Hauptseite und äußeren Hauptseite, die möglichst flächig gestaltet ist.

Bei Verbrauchern, die sich mit großen Fahrgeschwindigkeiten und demnach hohen Beschleunigungen bzw. Verzögerungen bewegen, wie z.B. bei Portalrobotern oder sonstigen Automatisierungsanlagen, ergeben sich Schwierigkeiten, im Betrieb stets den gewünschten Verlauf entlang der bestimmungsgemäßen Laufbahn zu gewährleisten. Zudem kann es bei Störungen, z.B. durch Fremdkörper, zu einem Ausschlagen der Leitungen aus der Führungsrinne kommen.

Eine heute verbreitete Anordnung, nämlich mit Energieführungsketten in konventionellen Führungsrinnen, an linearen Portaleinheiten in Überkopfanordnung oberhalb von automatisierten Bearbeitungseinheiten zeigt z.B. die DE 10 2007 009 329 A1, jedoch ohne nähere Beschreibung des Leitungsführungssystems. Solche Anordnungen sind vergleichsweise platzsparend, sie nehmen lediglich eine geringe Zusatzhöhe oberhalb der Linearachse ein, und sind inhärent für hohe Geschwindigkeiten geeignet.

Auf dem Gebiet der dynamischen Leitungsführung sind weiterhin sogenannte seitlich liegende Anordnungen von Energieführungen bekannt, bei denen die Trume horizontal nebeneinander verlaufen. Eine solche Anordnung ist in FIG.1A-1C gezeigt. In DE 10 2012 111 545 A1 wird für liegende Anordnungen eine komplexe, wartungsanfällige Mechanik mit schwenkbaren Bewegungsbegrenzern vorgeschlagen, die unkontrollierte Bewegungen des angetriebenen Trums, wie z.B. ein Ausschlagen, verhindern soll.

Eine weitere liegende Anordnung einer Energieführung ist in der FR 2 841 312 A1 beschrieben. Hierbei wird das bewegte Trum in der Führungsrinne auf Rollen gelagert, um die Reibung zu verringern. Außerdem haben die Rollen eine konische bzw. kegelstumpfartige Rollfläche, um zusätzlich einem Ausschlagen entgegenzuwirken.

Weiterhin wurde in DE 100 33 856 A1 eine seitlich liegende Anordnung einer Energieführung vorgeschlagen mit zwei seitlichen Gleitschienen, die Führungskanten bilden und einer höher angeordneten Mittelgleitschiene, auf welchen die Energieführung nur punkt- bzw. linienförmig aufliegt. Durch die höher angeordnete Mittelgleitschiene wird der Umlenkbogen angehoben und die Trume bleiben durch leichtes Kippen in den Führungskanten der Schienen gehalten. Typische Führungsrinnen sollen zur Reibungsminderung laut DE 100 33 856 A1 vermieden werden. EP 1 705 770 A1 offenbart ein Segment einer Führungsrinne nach dem Oberbegriff des Anspruchs 1.

Seitlich liegende Anordnungen bieten auch bei hohen Beschleunigungen einen vergleichsweise sicheren Betrieb. Die vorgenannten Lösungen zur Vermeidung von unkontrollierten Bewegungen bei liegenden Energieführungen sind jedoch technisch relativ aufwendig in der Herstellung und wartungsanfällig.

Gemäß einem ersten Aspekt der Erfindung sollen für eine seitlich liegende Anordnung, ein Leitungsführungssystem und eine Führungsrinne vorgeschlagen werden, die bei möglichst einfachem Aufbau große Fahrgeschwindigkeiten bzw. hohe Beschleunigungen bzw. Verzögerungen ermöglichen, insbesondere mit geringem bzw. ohne Risiko eines Ausschlagens der Leitungen.

### ERSTER ASPEKT DER ERFINDUNG

Nach dem ersten Aspekt ist bei einer gattungsgemäßen Anordnung nach dem Oberbegriff aus Anspruch 1 vorgesehen, dass die Energieführung seitlich liegend, d.h. mit den äußeren Hauptseiten beider Trume zum Rinnenboden gewandt bzw. diesem gegenüberliegend, in der Führungsrinne angeordnet ist. Entsprechend ist jedes Trum jeweils soz. seitlich liegend auf einer entsprechenden Lauffläche des Rinnenbodens verfahrbar.

Dies entspricht nicht der typischen Anordnung mit vertikal übereinander angeordneten Trumen. Eine Verwendung von Energieführungen in Seitenlage ist jedoch speziell für kreisförmige Fahrbahnen zur Leitungsführung bei Drehbewegungen bereits bekannt, z.B. aus WO 2013/007631 A1 der Anmelderin.

Gemäß dem ersten Erfindungsaspekt wird nun vorgeschlagen, dass der Rinnenboden mindestens eine Leitfläche mit einem zur Waagerechten schräg verlaufenden Querschnitt aufweist, welche einer Lauffläche zumindest des ersten Trums zugeordnet, insbesondere an dieser Lauffläche angeordnet ist. Dabei wirkt die mindestens eine Leitfläche einem Abweichen des ersten Trums aus seiner Soll-Lage entgegen. Die Soll-Lage ist dabei von der Position des bewegten Trumendes abhängig bzw. dynamisch zu verstehen und entspricht dem bestimmungsgemäß gewünschten, nominalen Verlauf des Trums auf seiner Lauffläche.

Ein Kerngedanke der Erfindung ist es mithin, zumindest dem potentiell ausbrechenden Längsabschnitt des bewegten bzw. angetriebenen ersten Trums einen im oder am Boden der Führungsrinne bzw. Rinnenboden ausgebildeten Höhenunterschied entgegenzusetzen, welcher ein Hindernis gegen unerwünschte Abweichungen des Verlaufs darstellt. Dies kann bereits durch eine Leitfläche mit einem zur Waagerechten schräg verlaufenden Querschnitt erreicht werden. Es kann dabei insbesondere eine Art Zwangsführung des bewegten Trums erzielt werden, z.B. zwischen einer Seitenwand und der Leitfläche oder zwischen dem angrenzenden Trum und der Leitfläche. Wie Versuche bei Hochgeschwindigkeit zeigen, tritt unerwünschtes Aufbäumen oder Ausbrechen typisch ca. im ersten endseitigen Drittel des mitnehmerseitigen Trums auf. Daher ist es grundsätzlich ausreichend, nur dieses eine Trum und nur diesen Längsbereich des Verfahrwegs mit der erfindungsgemäßen Leitfläche auszurüsten. Zur Vereinheitlichung der Teile und Vereinfachung der Montage kann jedoch die gesamte Führungsrinne mit der der Fahrbahn des Trums zugeordneten Leitfläche, ggf. auch symmetrisch für beide Trume, ausgestattet werden.

In einer Ausführungsform kann die mindestens eine Leitfläche eine Rampe bilden, die im Querschnitt vorzugsweise schief zur Waagerechten liegt, ähnlich einer schiefen Ebene. In einer alternativen Ausführungsform kann die mindestens eine Leitfläche eine Stufe bilden, die im Querschnitt vorzugsweise im Wesentlichen senkrecht liegt. Es ist auch denkbar, beide Formen zu kombinieren, z.B. mit einem stufenartigen ersten Bereich geringerer Höhe und einer anschließenden schiefen Rampe, die den restlichen vorbestimmten Höhenunterschied bewirkt. Dabei wird die Leitfläche, z.B. Rampe bzw. Stufe, beim Verfahren jeweils durch einen durchlaufenden Bereich des Umlenkbogens überwunden, sodass zwei unterschiedlich hoch gelegene Bereiche der Energieführung vorliegen, z.B. der Umlenkbogen ist höhenversetzt gegenüber der Höhenlage beider Trume, oder aber der Umlenkbogen verläuft schräg und beide Trume sind gegeneinander höhenversetzt.

In einer Ausführungsform kann zumindest der erste Trum zwischen einer Seitenwand der Führungsrinne und der Leitfläche des Rinnenbodens geführt sein.

In einer bevorzugten Ausführungsform kann eine ausgeprägte getrennte Leitfläche seitlich an der Lauffläche des ersten Trums angrenzend angeordnet sein, insbesondere entlang dieser verlaufend. Es ist alternativ auch möglich, die mindestens eine schief verlaufende Leitfläche zumindest teilweise oder vollständig durch die Lauffläche des ersten Trums zu erzeugen, d.h. auch die Lauffläche hat dann einen zumindest teilweisen schiefen Querschnitt.

Bevorzugt verlaufen die Laufflächen im Wesentlichen horizontal bzw. waagerecht. Es kann aber vorgesehen sein, dass die Lauffläche zumindest des ersten Trums, vorzugsweise beider Trume, einen zur Waagerechten schräg verlaufenden Querschnitt aufweist. Dabei können beide Laufflächen insbesondere voneinander abgewandte spitze Winkel zur Waagerechten bilden, z.B. im Bereich von 5-20°.

Vorzugsweise ist die Anordnung und Gestaltung der Führungsrinne für beide Trume bzw. zu einer Mittel-Längsebene der Führungsrinne symmetrisch, um eine verwechslungssichere Montage zu erleichtern.

Die Leitfläche(n) des Rinnenbodens kann/können im Querschnitt einen stufenartig oder stetig ändernden Winkel gegenüber der Waagerechten bilden. Ein stetig ändernder Winkel ist insbesondere zur Vermeidung von Reibungskanten vorteilhaft, und besonders gut kombinierbar mit Laufflächen, die ebenfalls einen schiefen Querschnitt haben.

Bevorzugt wird eine symmetrische Gestaltung des Rinnenbodens, bei welcher dieser eine erste ausgeprägte Leitfläche an der Lauffläche des ersten Trums aufweist, welche einem Abweichen des ersten Trums aus seiner Soll-Lage entgegenwirkt, und eine zweite ausgeprägte Leitfläche an der Lauffläche des zweiten Trums aufweist, welche einem Abweichen des zweiten Trums aus seiner Soll-Lage entgegenwirkt.

Hierbei können die Laufflächen seitlich außen an die Seitenwände angrenzend verlaufen und die mindestens eine oder beide Leitflächen zwischen den Laufflächen vorgesehen sein.

In einer Weiterbildung ist vorgesehen, dass die Leitfläche(n) seitlich an einer im Querschnitt konvex gewölbten Verbindungsfläche zwischen den Laufflächen beider Trume ausgebildet ist bzw. sind. Die Verbindungsfläche und/oder Leitfläche kann eine durchgehend konvex gewölbte Fläche, insbesondere eine bogenförmig gekrümmte Fläche sein, welche in die Stufe(n) bzw. Rampe(n) übergeht.

Eine alternative, weniger bevorzugte Ausführung sieht vor, dass die mindestens eine Leitfläche seitlich außen entlang einer der beiden Seitenwände verläuft und zwischen dieser Leitfläche und der anderen gegenüberliegenden Seitenwand die Laufflächen beider Trume vorgesehen sind. Auch diese Anordnung kann symmetrisch mit Leitflächen für beide Trume, oder asymmetrisch mit einer Leitfläche nur für das mitnehmerseitig angetriebene erste Trum realisiert werden.

Zur Verringerung von Reibung und/oder Verschleiß können Laufrollen vorgesehen sein, mittels welchen zumindest das erste Trum über seiner Lauffläche abrollt, wobei die Laufrollen vorzugsweise über den Rinnenboden vorstehend an diesem ortsfest angeordnet sind, um das Verfahren des Umlenkbogens nicht zu beeinträchtigen. Wenn das Trum seitlich an der Seitenwand abstützt, insbesondere bei einem leicht schiefen Verlauf, ist es vorteilhaft, wenn weitere Stützrollen vorgesehen sind, mittels welchen zumindest das erste Trum an einer Seitenwand abrollt. Solche Stützrollen können vorzugsweise an Gliedern der Energieführung angebracht sein, da diese im Umlenkbogen unwirksam sind.

Für eine gute Leitwirkung ohne übermäßigen Verschleiß ist es vorteilhaft, wenn jede Leitfläche einen Höhenunterschied überbrückt, der im Bereich von 5% bis 50% der Höhenabmessung der liegend angeordneten Energieführung beträgt. Dabei sollten die Seitenwände hingegen vorzugsweise eine Höhenabmessung von mindestens 75%, vorzugsweise mindestens 100% der Höhenabmessung der liegend angeordneten Energieführung aufweisen, um die liegende Energieführung zuverlässig zu halten.

Die Weiterentwicklung gemäß dem ersten Aspekt ist sowohl für lineare Bahnen als auch für gekrümmte, insbesondere kreisförmige Verfahrwege geeignet, d.h. wenn die Energieführung über einen Kreisbogen geführt innerhalb des Drehwinkelbereichs hin und her verfahrbar ist. Für lineare Anwendungen sind die Seitenwände und der Rinnenboden zwecks linearer Führung der Trume linear erstreckt.

Wegen der seitlichen Lage der Energieführung entspricht - bei vorgegebenem Biegeradius im Umlenkbogen der Energieführung - der freie Abstand zwischen den Seitenwänden mindestens dem vorgegebenen Außendurchmesser des Umlenkbogens (anders als bei typischer Vertikalanordnung der Trume, wo die Seitenwände etwa im Abstand der Gliederbreite plus Spiel angeordnet sind). Für eine gute Führung entlang der Seitenwände der Führungsrinne ist es vorteilhaft, wenn die Energieführung vorzugsweise mit Vorspannung ausgeführt ist und der freie Abstand zwischen den Seitenwänden grösser ist, als der vorgegebene Außendurchmesser des Umlenkbogens. Hierdurch wird ein "Anschmiegen" der Trume bzw. ein nicht anliegender Übergangsbereich am Umlenkbogen erzielt, was u.a. geräuschmindernd wirkt.

Der erfindungsgemäß mit einer Leitfläche ausgestattete Rinnenboden lässt sich fertigungstechnisch günstig verwirklichen, wenn dieser ein geformtes Metallblechprofil aufweist oder aus einem solchen besteht. Das Metallblechprofil kann durch Umformen so gestaltet werden, dass es oberseitig die Laufflächen und die mindestens eine Leitfläche bildet. Es besteht dabei u.a. hohe Freiheit in der Geometrieauswahl.

Bevorzugt wird ein Blech aus Edelstahl gepaart mit einer Energieführung mit Gliedern aus Kunstsoff verwendet. Der Rinnenboden kann insbesondere einteilig mit den Seitenwänden hergestellt sein, z.B. aus einem gekanteten dünnwandigen Blech.

In den meisten Anwendungsfällen wird das erste Trum endseitig an einer ersten Anschlussstelle und das zweite Trum endseitig an einer zweiten Anschlussstelle festgelegt, wobei die erste Anschlussstelle zur stationären zweiten Anschlussstelle relativbeweglich ist. Es ist aber auch denkbar, dass beide Anschlussstellen zueinander relativbeweglich sind. Im Übrigen beinhaltet eine vorliegend als "linear" bezeichnete Anwendung auch eine geringfüge Bewegung seitwärts quer zu einer überwiegend linearen Hauptbewegungsrichtung.

### ZWEITER ASPEKT DER ERFINDUNG

Die Erfindung betrifft ferner ein Führungssystem für mindestens eine Versorgungsleitung, umfassend eine Energieführung mit einer Vielzahl Gliedern, die jeweils gelenkig miteinander verbunden sind, so dass die Energieführung unter Ausbildung eines ersten Trums, eines zweiten Trums sowie eines Umlenkbogens, welcher beide Trume verbindet, hin und her verfahrbar ist. Zumindest eine Anzahl der Glieder haben dabei mindestens ein laschenartiges Seitenteil mit einer inneren und einer äußeren Hauptseite. Das Führungssystem umfasst ferner eine Führungsrinne mit zwei seitlich gegenüberliegenden Seitenwänden und dazwischen einem Rinnenboden, wobei die Seitenwände und der Rinnenboden zwecks Führung der Energieführung eine lineare Erstreckung aufweisen, und die Energieführung seitlich liegend, mit den äußeren Hauptseiten beider Trume zum Rinnenboden gewandt, in der Führungsrinne angeordnet ist. Jedes Trum ist jeweils auf einer entsprechenden Lauffläche des Bodens im Wesentlichen linear verfahrbar.

Erfindungsgemäß ist dabei vorgesehen, dass der Rinnenboden mit mindestens einer Leitfläche ausgestattet ist, welche eine Stufe umfasst, die einem Abweichen des bewegten bzw. ersten Trums von seiner Lauffläche entgegenwirkt und welche einen vorbestimmten Höhenunterschied zur Lauffläche des bewegten bzw. ersten Trums bewirkt, der beim Verfahren durch den Umlenkbogen überwunden wird.

Nebst der nominalen Lauffläche für jedes Trum bildet der Rinnenboden dadurch ein zu überwindendes stufenartiges Hindernis, das einer ungewollten Seitwärtsbewegung zumindest des bewegten Trums entgegenwirkt. Bevorzugt bildet die Leitfläche zusätzlich zur Höhe der Stufe eine weitere Anhöhe, die beim Verfahren durch den Umlenkbogen zu überwinden ist. Dadurch wird eine leichte Kippwirkung in den Rinnenboden integriert, welche

Übergangsbereiche der Trume nahe dem Umlenkbogen gegen die Seitenwände drückt. Dabei kann der durch die Leitfläche gebildete Höhenunterschied beim Verfahren durch einen durchlaufenden Bereich des Umlenkbogens überwunden werden, sodass zwei unterschiedlich hoch gelegene Bereiche der Energieführung vorliegen. Es kann z.B. der Umlenkbogen höhenversetzt gegenüber der Höhenlage beider Trume geführt sein, oder der Umlenkbogen kann schräg verlaufen, wobei die beiden Trume gegeneinander höhenversetzt sein können.

Eine weiterentwickelte Ausführungsform sieht vor, dass die mindestens eine Leitfläche zusätzlich zu der Stufe eine gekrümmte Fläche oder schiefe Rampenebene oder dgl. umfasst, die an die Stufe anschließend ausgebildet ist und einen Teil des Höhenunterschieds im Rinnenboden bewirkt.

Die mindestens eine Leitfläche kann insbesondere eine konvex gewölbte Fläche umfassen, die an die Stufe anschließend ausgebildet ist und einen Teil des Höhenunterschieds bewirkt. Ein anderer Anteil des Höhenunterschieds wird durch die Stufe bewirkt, wobei der gesamte Höhenunterschied vorzugsweise kleiner als ein Drittel (33%) der Höhenabmessung der liegenden Trume darstellt.

Der Umlenkbogen kann insbesondere durch die Formgebung der Leitfläche höhenversetzt oberhalb der Laufflächen bzw. höher als die nominale Höhenlage beider Trume geführt sein. Insbesondere kann der mittlere Bereich des Umlenkbogens höhenversetzt gegenüber der Höhenlage beider auf den Laufflächen geführten Trume auf der Leitfläche verfahren.

Bevorzugt wird, dass die Stufe bzw. Leitfläche so angeordnet ist, dass das bewegte Trum zwischen einer Seitenwand der Führungsrinne und der Stufe geführt ist. Die Laufflächen sind bevorzugt als Vertiefung im Rinnenboden ausgeführt, die an die Seitenwände angrenzen. Die Lauffläche zumindest des ersten Trums, vorzugsweise beider Trume, kann einen im Wesentlichen waagerecht verlaufenden Querschnitt aufweisen.

Merkmale des einen Aspekts der Erfindung sind mit denen des anderen vorteilhaft kombinierbar.

Die Erfindung betrifft auch eine Führungsrinne für eine Energieführung, die aus mehreren Längssegmenten bzw. Längsabschnitten mit je einem Rinnenboden nach einem der vorstehenden Ausführungsbeispiele zusammengesetzt ist.

Die Erfindung betrifft weiterhin ein Segment zum Aufbau einer Führungsrinne für ein Leitungsführungssystem, das zumindest einen Rinnenboden nach einem der vorstehenden Ausführungsbeispiele aufweist.

Die Erfindung eignet sich besonders - aber nicht ausschließlich - zur Anwendung in einer linearen Portaleinheit für flexible Fertigungsanlagen, mit mindestens einer Linearachse und einer an dieser verfahrbaren Handhabungsvorrichtung. Dabei kann die Portaleinheit ein Leitungsführungssystem nach einem der vorstehenden Ausführungsbeispiele umfassen, welches zur Versorgung an die Handhabungsvorrichtung angeschlossen ist.

Weitere Einzelheiten, Merkmale und Vorteile der Erfindung ergeben sich ohne Beschränkung aus der nachfolgenden, ausführlichen Beschreibung bevorzugter Ausführungsbeispiele anhand der beiliegenden Abbildungen. Diese zeigen:
FIG.1A-1C: schematische Ansichten eines Leitungsführungssystems mit einer Energieführung und Führungsrinne gemäß einer aus dem Stand der Technik bekannten liegenden Anordnung, in Draufsicht einer ausgefahrenen Endstellung (FIG.1A) bzw. einer eingefahrenen Endstellung (FIG.1B) und im Querschnitt (FIG.1C) ;
FIG.2: eine perspektivische Ansicht mehrerer Kettenglieder einer Energieführungskette als Beispiel einer Energieführung;
FIG.3A-3C: Ansichten eines Leitungsführungssystems mit Energieführung und Führungsrinne gemäß einem ersten Ausführungsbeispiel der Erfindung, im Querschnitt (FIG.3A), in Draufsicht (FIG.3B) bzw. in perspektivischer Ansicht (FIG.3C), wobei zur besseren Darstellung der Einzelheiten nur ein Segment bzw. Längsabschnitt der Führungsrinne gezeigt ist;
FIG.4A-4D: Ansichten eines weiteren Ausführungsbeispiels eines Leitungsführungssystems, im Querschnitt (FIG.4A), in Draufsicht (FIG.4B), in perspektivischer Ansicht (FIG.4C) und in Seitenansicht (FIG.4D), wobei zwei baugleiche Längssegmente der Führungsrinne gezeigt sind;
FIG.5A-5C: Ansichten eines weiteren Ausführungsbeispiels eines Leitungsführungssystems, im Querschnitt (FIG.5A), in Draufsicht (FIG.5B) bzw. in perspektivischer Ansicht (FIG.5C), wobei zur besseren Darstellung der Einzelheiten nur ein Segment bzw. Längsabschnitt der Führungsrinne gezeigt ist;
FIG.6-9: schematische Querschnitte zu vier weiteren Ausführungsbeispielen, die Abwandlungen des Prinzips aus FIG.3A-3C darstellen; und
FIG.10: Ansichten eines besonders bevorzugten weiteren Ausführungsbeispiels eines Leitungsführungssystems, im Querschnitt (FIG.10A), in einem Längsschnitt gemäß den Schnittlinien B-B (FIG.10B), und in perspektivischer Ansicht (FIG. 10C), wobei zur besseren Übersicht nur ein Segment bzw. Längsabschnitt der Führungsrinne gezeigt ist.

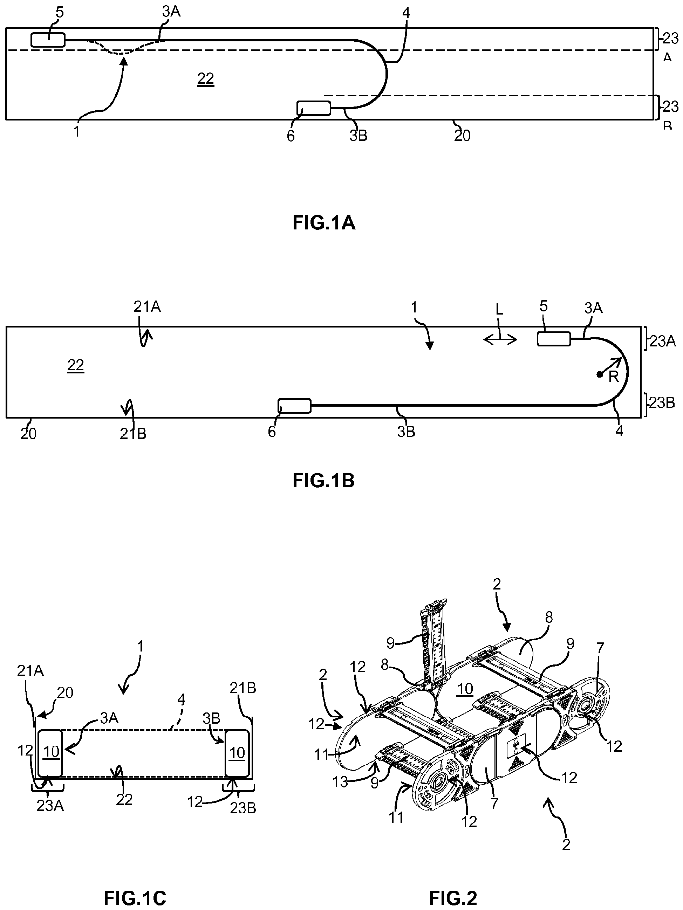

FIG.1A-1C zeigen schematisch ein Leitungsführungssystem, das im Wesentlichen aus einer Energieführungskette 1 und einer Führungsrinne 20 besteht. Die Führungsrinne 20 führt die Energieführungskette 1 beim Verfahren. Die Energieführungskette 1 wiederum führt nicht näher gezeigte Leitungen und ist in an sich bekannter Bauweise aus einzelnen Gliedern 2 (FIG.2) zusammengesetzt, die jeweils schwenkbar miteinander verkettet sind. Jedes Glied 2 kann beispielsweise aus zwei Seitenteilen 7, 8 und zwei Öffnungsstegen bzw. Querstegen 9 zusammengesetzt sein (FIG.2). Die Querstege 9 halten die Seitenteile 7, 8 parallel zueinander und können mit diesen einteilig oder lösbar (Öffnungsstege) hergestellt sein. Jedes Seitenteil 7, 8 hat naturgemäß eine bezüglich des Innenraums 10 innere Hauptseite 11 und davon abgewandt eine äußere Hauptseite 12. Die Seitenteile 7, 8 bilden an den langen Seiten der Hauptseiten 11, 12 im Wesentlichen parallel zur Längsrichtung der Energieführungskette 1 verlaufende Schmalseiten 13. FIG.2 zeigt beispielhaft eine Energieführungskette 1 mit Gliedern 2 abwechselnder Bauweise mit vierteiligen Innen- und Außenlaschen, d.h. dass vor allem die Außenlaschen flächige äußere Hauptseiten 12 bereitstellen (vgl. FIG.2). Auch andere Bauweisen kommen in Betracht, insbesondere solche, die mindestens einen kettenartigen Strang aus laschenartigen Seitenteilen 7, 8 bilden.

Die Energieführungskette 1 ist zwischen einer ersten Endstellung gemäß FIG.1A und einer zweiten Endstellung gemäß FIG.1B hin und her verfahrbar. Im Ausführungsbeispiel nach FIG.1A-1C verfährt die Energieführungskette 1 entsprechend einem linearen Verfahrweg (vgl. Doppelpfeil L in FIG.1B). Die Energieführungskette 1 bildet dabei ein erstes Trum 3A und ein zweites Trum 3B sowie einen Umlenkbogen 4, welcher die Trume 3A, 3B verbindet. Der Umlenkbogen 4 bewahrt aufgrund der Konstruktion der Glieder 2 einen vorgegebenen Biegeradius R. So werden die im Innenraum 10 der Energieführungskette 1 aufgenommenen, flexiblen Leitungen (nicht gezeigt) insbesondere gegen Abknicken geschützt.

Das erste Trum 3A ist an einem in FIG.1A-1C beispielhaft linear beweglichen, d.h. mit dem angetriebenen Maschinenteil verbundenen Mitnehmer 5 endseitig befestigt. Das zweite Trum 3B ist endseitig an einem hier beispielhaft stationären Festpunkt 6 festgelegt. Mitnehmer 5 und Festpunkt 6 bilden zueinander relativbewegliche Anschlussstellen. Bestimmungsgemäß führt die Energieführungskette 1 somit die (nicht gezeigten) Leitungen aktiv vom Festpunkt 6 zu dem hin- und herfahrenden Mitnehmer 5, hier entsprechend einem linearen Verfahrweg L.

Wie am besten aus FIG.1C ersichtlich, hat die Führungsrinne 20 zwei im Wesentlichen vertikale Seitenwände 21A, 21B sowie einen dazwischen liegenden, hier im Wesentlichen horizontalen, ebenen Rinnenboden 22. Gemäß dem Ausführungsbeispiel in FIG.1A-1C ist die Energieführungskette 1 seitlich liegend zwischen den Seitenwänden 21A, 21B innerhalb der nach oben offenen Führungsrinne 20 angeordnet. Mit anderen Worten, die äußeren Hauptseiten 12 der unteren Seitenteile 7 der Kettenglieder 2 sind bei der liegenden Anordnung dem Rinnenboden 22 zugewandt. Dementsprechend liegen bei dieser Anordnung die Außenseiten der Energieführungskette 1 mit den Schmalseiten 13 bzw. Querstege 9 der Glieder 2 den Seitenwänden 21A, 21B gegenüber. Im Gegensatz zur typischen Anordnung mit Trumen vertikal übereinander können somit beide Trume 3A, 3B jeweils auf einer entsprechenden Lauffläche 23A, 23B des Rinnenbodens 22 abgestützt verfahren. In FIG.1A-1C sind die Laufflächen 23A, 23B waagerecht bzw. horizontal angeordnet. Weil der Mitnehmer 5 entlang einer linearen Verfahrrichtung L verfährt, ist der Sollverlauf der beiden Trume 3A, 3B jeweils geradlinig bzw. entsprechend linear verlaufender Laufflächen 23A, 23B.

Bereits die einfache seitlich liegende Anordnung einer Energieführungskette 1 erlaubt lange Verfahrwege, z.B. größer als 20m, und/oder sehr hohe Beschleunigungen, ohne dass die Energieführungskette 1 dabei aus der Führungsrinne 20 ausbrechen kann. Dies ist allgemein für viele Anwendungen mit hohen Verfahrgeschwindigkeiten bzw. Taktraten vorteilhaft, u.a. bei linearen Portaleinheiten, insbesondere Portalrobotern für flexible Fertigungsanlagen, wie z.B. in DE 10 2007 009 329 A1 beschrieben.

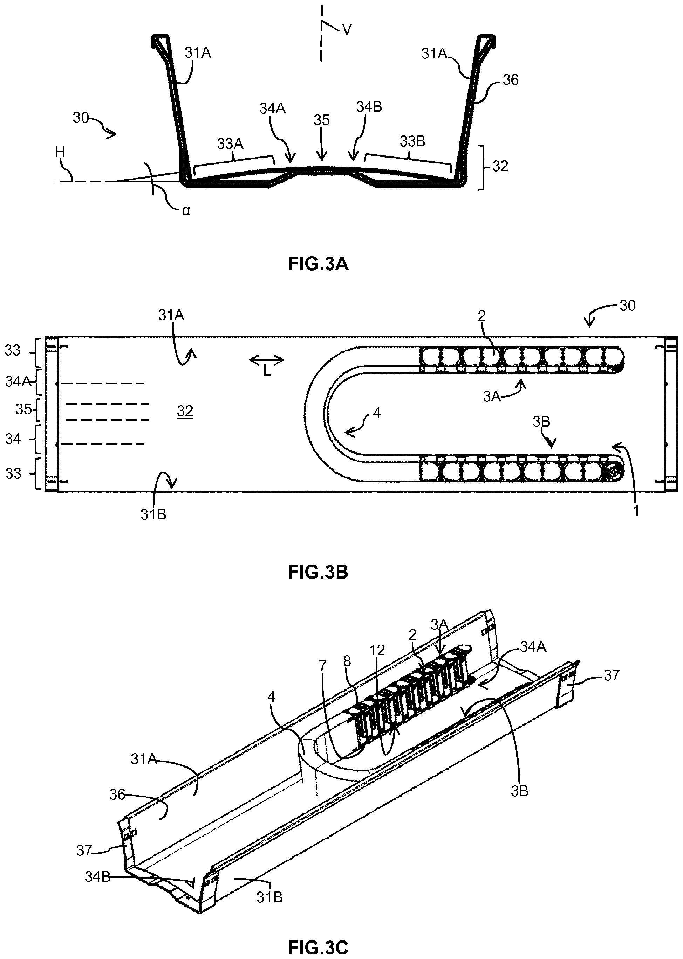

Erfindungsgemäß wird ein erstes Ausführungsbeispiel nach FIG.3A-3C eine Führungsrinne 30 vorgeschlagen, bei welcher der Rinnenboden 32 eine verbesserte Führung beider Trume 3A, 3B erzielt. Dieser erste Aspekt ist unabhängig vom Vorstehenden nicht nur bei linearem Verfahrweg L, sondern auch z.B. bei kreisförmigem Bahnen (hier nicht gezeigt, siehe z.B. WO2013007631A1) anwendbar.

Bei der Führungsrinne 30 nach FIG.3A-3C sind sowohl die erste Lauffläche 33A für das erste Trum 3A (nur z.T. gezeigt) als auch die zweite Lauffläche 33B für das zweite Trum 3B (nur z.T. gezeigt) jeweils leicht schräg zur Waagerechten H angeordnet, hier spiegelsymmetrisch zur Senkrechten V. Die Laufflächen 33A, 33B stehen somit unter Bildung eines spitzen Winkels α zur Waagerechten H. Die beiden Seitenwände 31A, 31B der Führungsrinne 30 stehen etwa senkrecht zu der jeweils angrenzenden Lauffläche 33A bzw. 33B und dementsprechend leicht schräg zur Vertikalen V, etwa mit Winkel α. Die Laufflächen 33A, 33B fallen seitlich nach außen zu den Seitenwänden 31A, 31B hin ab, d.h. die Winkel α zur Horizontalen H weisen voneinander weg.

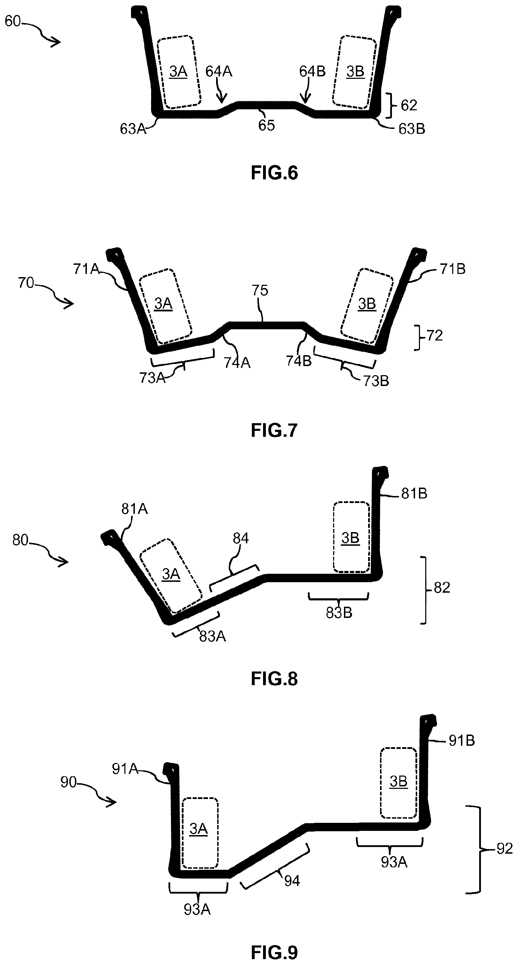

Weiterhin ist gemäß FIG.3A-3C an der Innenseite jeder Lauffläche 33A, 33B jeweils angrenzend eine zugeordnete, ausgeprägte Leitfläche 34A, 34B vorgesehen. Beide Leitflächen 34A, 34B haben ebenfalls einen gegenüber der Waagerechten H schräg verlaufenden Querschnitt (FIG.3A), hier konvex nach oben gekrümmt. Die erste Leitfläche 34A geht seitlich nach außen hin stufenlos in die zugeordnete Lauffläche 33A über. Auch ein sprunghafter Übergang mit einer geringfügigen steileren Stufe (vgl. FIG.7) oder mit einem nicht stetig verändernden Winkel zur Waagerechten H ist möglich. Entsprechendes gilt analog für die der zweiten Lauffläche 33B zugeordnete zweite Leitfläche 34B. Die Leitflächen 34A, 34B sind ebenfalls spiegelsymmetrisch zu einer Mittelebene der Führungsrinne 30.

Wie ohne weiteres aus FIG.3A-3C ersichtlich, wirken die beiden Leitflächen 34A, 34B unter Ausnutzung der Schwerkraft einem Abweichen des jeweiligen Trums 3A, 3B von der bestimmungsgemäßen Soll-Lage, hier oberhalb der linear verlaufenden Laufflächen 33A, 33B, entgegen. Wie FIG.3A am besten zeigt, sind die beiden näherungsweise stetig gekrümmten Leitflächen 34A, 34B durch einen entsprechend konvex nach oben gekrümmten Übergangsbereich 35 flächig miteinander verbunden. Durch den Scheitelpunkt des Übergangsbereichs 35 wird ein Höhenunterschied im Vergleich zur Lage der Laufflächen 33A, 33B erzeugt, welcher vom Umlenkbogen 4 überwunden werden muss. Lediglich der mittlere Bereich des Umlenkbogens 4 verläuft hierbei jeweils beim Hin- und Herfahren der Energieführungskette 1 über diesen Übergangsbereich 35, wodurch eine Schräglage der Trume 3A, 3B entsteht. Der leicht schiefe Verlauf der Laufflächen 33A, 33B und auch der Seitenwände 31A, 31B ist der Schräglage der Trume 3A, 3B angepasst, vgl. FIG.3C, die der Höhenunterschied erzeugt. Insgesamt leiten die Leitflächen 34A, 34B als schiefe Rampen, sowie auch die entsprechend konvexen Laufflächen 33A, 33B, beide Trume 3A, 3B jeweils seitlich nach außen zu der jeweiligen Seitenwand 31A bzw. 31B im Beispiel nach FIG.3A-3C. Günstiges Laufverhalten, insbesondere ein Anschmiegen der Trume 3A, 3B an die Seitenwände 31A bzw. 31B, kann unterstützt werden, wenn die lichte Breite zwischen den Seitenwänden 31A, 31B dem Umlenkbogen 4 seitliches Spiel lässt und die Energieführungskette 1 mit Vorspannung in der Strecklage der Trume 3A, 3B ausgeführt ist, sodass die Trume 3A, 3B seitlich nach außen zu den Seitenwänden 31A bzw. 31B tendieren.

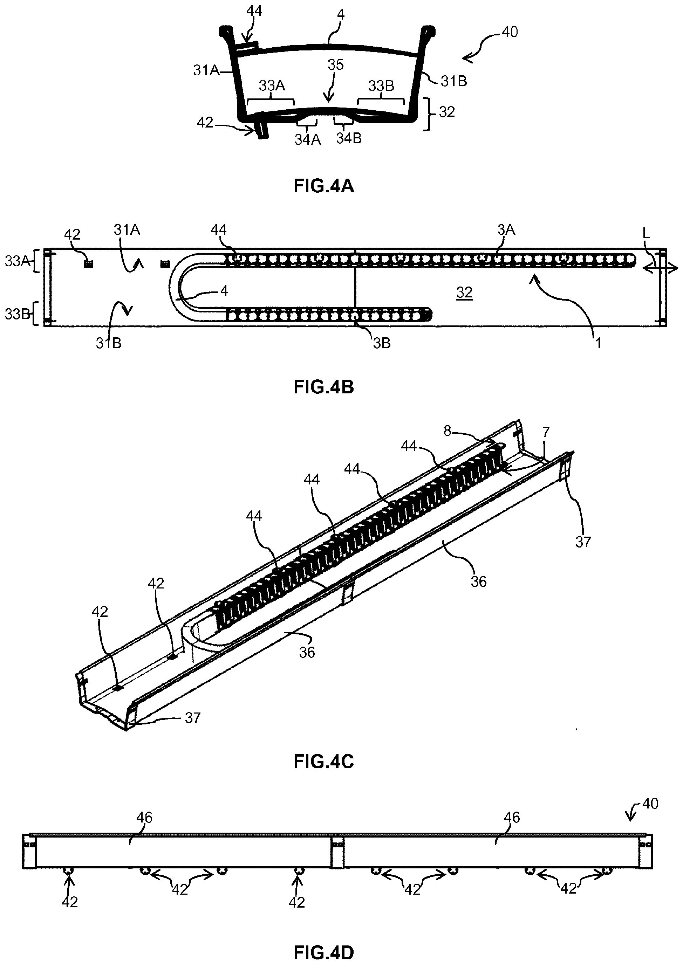

In der bevorzugten Ausführungsform nach FIG.3A-3C ist der Rinnenboden 32 einteilig mit den Seitenwänden 31A, 31B aus einem dünnen Metallblech 36 im Umformverfahren hergestellt. Das Metallblech 36 kann günstig in die gewünschte Querschnittsform der Laufflächen 33A, 33B und der Leitflächen 34A, 34B gebracht werden, z.B. durch Biegen und Kanten im Kaltform-Verfahren. Je nach Abmessungen sind andere Umformverfahren möglich. Der Rinnenboden 32 kann auch z.B. mit Kunststoffteilen, z.B. geeigneten Einlagen in eine herkömmliche Rinne, erzeugt werden. Durch zusätzliche stirnseitig überstehende Halterelemente 37 wird das Metallblech 36 gehalten und zugleich in Längsrichtung mit weiteren entsprechenden Metallblechen 36 zu einer Rinne verbunden (vgl. FIG.4C-4D). Ein Metallblech 36 und mindestens ein Halterelement 37 bilden zusammen ein Längssegment zum Aufbau einer Führungsrinne 30.

Im Ausführungsbeispiel nach FIG.3A-3C liegt keine scharfkantige Trennung zwischen den eigentlichen Laufflächen 33A, 33B für die Trume 3A bzw. 3B und den seitlich entlang diesen verlaufenden Leitflächen 34A, 34B vor. Auch die Laufflächen 33A, 33B selbst haben durch den schiefen Querschnitt eine Leitwirkung, die wie bei den eigentlichen Leitflächen 34A, 34B einem unerwünschten Verlauf (in FIG.1A schematisiert in punktierter Linie gezeigt) entgegenwirkt, d.h. die Laufflächen 33A, 33B gehen fließend in die Leitflächen 34A, 34B über und umgekehrt. Dies vermeidet unerwünschte Reibung, Verschleiß und Geräuschbildung.

In der an die Bauweise aus FIG.3A-3C angelehnten Weiterbildung nach FIG.4A-4D sind gleiche Teile mit gleichen Bezugszeichen bezeichnet. Diese Führungsrinne 40 hat zusätzlich nur an der Lauffläche 33A des ersten Trums 3A vorgesehene Laufrollen 42. Die Laufrollen 42 sind mit Drehachsen parallel zur Lauffläche 33A am Rinnenboden 32 befestigt und stehen leicht vertikal über die Oberseite der Lauffläche 33A über. Die Laufrollen 42 sind in regelmäßigem Abstand, entsprechend z.B. jedem n-ten Glied 2 vorgesehen. Anhand der Laufrollen 42 kann das erste Trum 3A über seiner Lauffläche 33A abrollen, was im Vergleich zu einer Anordnung mit rein gleitenden Hauptseiten 12, wie z.B. in FIG.1A-C bzw. FIG.3A-3C noch höhere Geschwindigkeiten bzw. Längen ermöglicht. Außerdem können am oberen Seitenteil 8 (vgl. FIG.2) zusätzliche Stützrollen 44 vorgesehen sein, mittels welchen das erste Trum 3A beim Verfahren an der entsprechenden Seitenwand 31A abrollen kann. Die Stützrollen 44 sind an der Hauptseite 12 des oberen Seitenteils 8 mit Drehachsen etwa senkrecht zu denen der ortsfesten Laufrollen 42 angeordnet. Die Stützrollen 44 können dabei als separate Module, z.B. gemäß DE 20 2014 104 550 U1 der Anmelderin, deren Lehre durch Verweis einbezogen wird, zum Nachrüsten einer Energieführungskette 1 bekannter Bauweise ausgeführt sein. Abgesehen von den Laufrollen 42 und entsprechenden Aussparungen und Haltern am Formblech ist die Bauweise der Führungsrinne 40 in FIG.4A-4D identisch zu der Führungsrinne 30 aus FIG.3A-3C. FIG.4A-4D zeigt jedoch zwei Segmente 46 als Komponenten zum Aufbau der Führungsrinne 40.

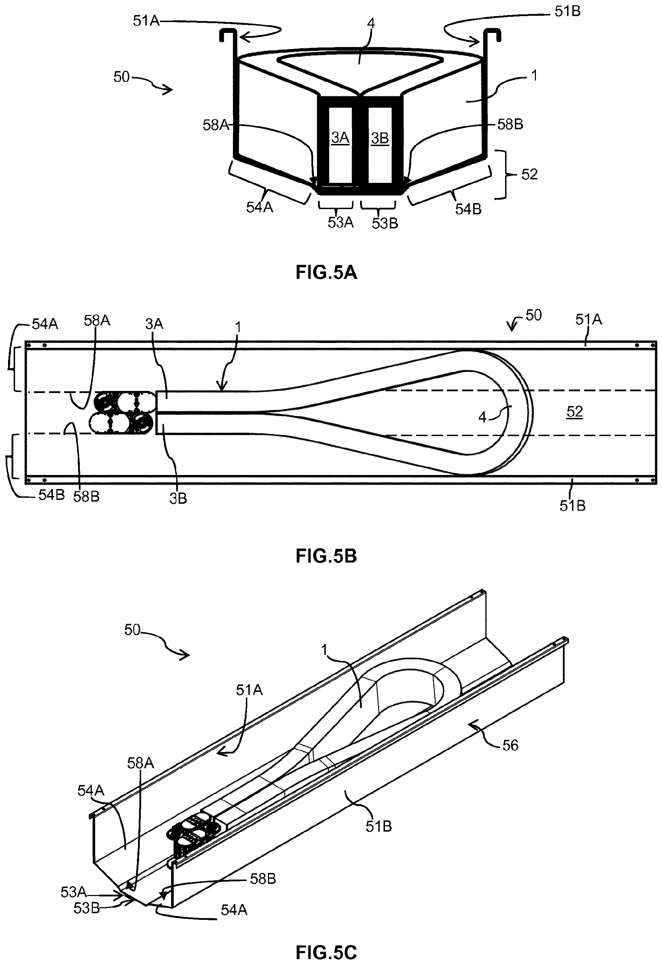

FIG.5A-5C zeigt eine weitere Ausführungsform einer zur Vertikalen V spiegelsymmetrisch ausgeführten Führungsrinne 50 mit seitlich darin liegend geführter Energieführungskette 1. Funktionsgleiche Teile sind mit entsprechenden Bezugszeichen bezeichnet. Der wesentliche Unterschied besteht darin, dass die Laufflächen 53A, 53B hier nicht seitlich außen an den Seitenwänden 51A, 51B verlaufen, sondern mittig als Vertiefung im mittleren Bereich des Rinnenbodens 52. Die als schiefe Ebenen angeordneten Leitflächen 54A, 54B verlaufen in FIG.5A-5C hingegen von den Laufflächen 53A, 53B ausgehend nach außen und nach oben hin zu den Seitenwänden 51A, 51B ansteigend. Damit liegen die getreckten Trume 3A, 3B (nur z.T. gezeigt) hier gegeneinander abstützend tiefer gegenüber den Seitenwänden 51A, 51B im Vergleich zu FIG.3A-3C, was ein potentielles Ausbrechen bei etwa gleichem Materialaufwand noch zuverlässiger verhindert. Zudem zeigt FIG.5C am besten, dass die rampenartigen Leitflächen 54A, 54B hier am Übergang zu den Laufflächen 53A, 53B jeweils eine leicht abgeschrägte Stufe 58A, 58B mit steilerem Winkel bilden, was die Leitwirkung weiter verbessert. Auch die sich nach seitlich außen anschließende schiefe Rampenfläche an den Leitflächen 54A, 54B kann hier steiler ausgeführt sein als z.B. in FIG.3A-3C. Entsprechend hat das Formblech 56 hier eine andere Formgebung mit nach unten konkavem etwa U-förmigem Querschnitt.

FIG.6-7 zeigen in schematischem Querschnitt weitere Varianten erfindungsgemäßer Führungsrinnen 60; 70; 80; 90 nach dem ersten Aspekt, wobei nur die Trume 3A, 3B gestrichelt gezeigt sind.

Bei der Führungsrinne 60 nach FIG.6 sind die Leitflächen 64A, 64B als schiefe Rampen mit unstetigen Kanten zu horizontalen Laufflächen 63A, 63B und einer etwa horizontalen Mittelebene 65 des Rinnenbodens 62 ausgeführt. In der Abwandlung nach FIG.7 haben die Laufflächen 73A, 73B selbst - ähnlich wie in FIG.3A-3C - auch einen schiefen Querschnitt und damit Leitwirkung. Zusätzlich sind ausgeprägte, rampenartige Leitflächen 74A, 74B wie in FIG.6 vorgesehen. Die Seitenwände 71A, 71B stehen etwa senkrecht zu den Laufflächen 73A, 73B und damit schräger als in FIG.6.

FIG.8 zeigt eine asymmetrische Ausführung, bei welcher nur für das angetriebene Trum 3A eine zugeordnete Leitfläche 84 vorgesehen ist. Die Lauffläche 83A kann dabei integraler Bestandteil der schiefen Leitfläche 84 sein bzw. fließend in diese übergehen. Die Ausführungsform nach FIG.8 lässt sich z.B. durch etwa mittiges Abkanten einer bestehenden Rinnengeometrie erzeugen. Die Lauffläche 83B für das stationär am Festpunkt festgelegte Trum 3B ist horizontal und hat in FIG.8 keine Leitwirkung und keine zugeordnete Leitfläche. In der ebenfalls asymmetrischen Variante nach FIG.9 sind die Laufflächen 93A, 93B beide horizontal und lediglich der angetriebene Trum 3A ist einer rampenförmigen, schiefen Leitfläche 94 zugeordnet. Die Übergänge zwischen Leitflächen 84, 94 und Laufflächen 83A, 83B; 93A, 93B können gerundet sein.

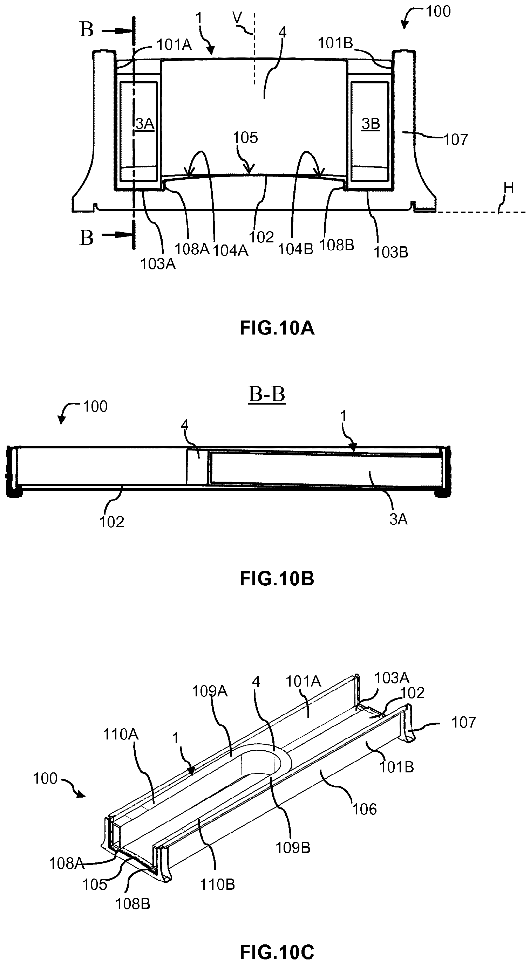

FIG.10A-10C zeigt eine weitere, besonders bevorzugte Ausführungsform einer zur Vertikalen V spiegelsymmetrisch ausgeführten Führungsrinne 100 mit seitlich darin liegend geführter Energieführungskette 1. Die Führungsrinne 100 in FIG.10A-10C ist eine Weiterentwicklung bzw. Variante zu FIG.3A-3C, funktionsgleiche Teile sind mit entsprechenden Bezugszeichen bezeichnet. Die Laufflächen 103A, 103B verlaufen in einer horizontalen Ebene bzw. parallel zur Waagerechten H entlang und angrenzend an die Seitenwände 101A, 101B der Führungsrinne 100. Die Seitenwände 101A, 101B stehen etwa senkrecht zu der jeweils angrenzenden Lauffläche 103A bzw. 103B. Die zwischen den beiden Laufflächen 103A, 103B angeordneten Leitflächen 104A, 104B erstrecken sich in Längsrichtung der Führungsrinne 100 jeweils seitlich angrenzend an die zugeordneten Laufflächen 103A, 103B. Die Leitflächen 104A, 104B bilden einen unstetigen Übergang zu den Laufflächen 103A, 103B, jeweils durch eine im wesentlichen senkrechte Stufe 108A, 108B, was die Leitwirkung verbessert. Somit verlaufen die Laufflächen 103A, 103B als rinnenartige Vertiefungen im Rinnenboden 102 entlang der Seitenwände 101A, 101B, seitlich durch die Seitenwände 101A, 101B und Stufen 108A, 108B begrenzt. Zur Mitte hin sind die Leitflächen 104A, 104B gebogen bzw. gekrümmt mit im Querschnitt des Rinnenbodens 102 einem stetig ändernden Winkel gegenüber der Waagerechten H, ausgehend von den Stufen 108A, 108B hin zu einem mittleren Übergangsbereich 105, sie fallen seitlich nach außen zu den Laufflächen 103A, 103B ab. Beide Leitflächen 104A, 104B sind in FIG.10A-10C ebenfalls spiegelsymmetrisch zur senkrechten Längsmittelebene der Führungsrinne 100. Die eine Leitfläche 104A geht fließend in die andere Leitfläche 104B über. Damit bilden die Leitflächen 104A, 104B eine stetig gekrümmte konvexe Fläche und der Rinnenboden 102 weist mittig eine konvexe Verbindungsfläche im Übergangsbereich 105 auf, der die beiden Leitflächen 104A, 104B verbindet. Die von den Leitflächen 104A, 104B und deren Übergangsbereich 105 gebildete Fläche ist im Querschnitt etwa kreisbogenförmig mit einem Krümmungsradius, der bevorzugt mindestens dem Zweifachen der Innenbreite zwischen den Seitenwänden 101A, 101B entspricht. Der Übergangsbereich 105 bildet dabei einen höher liegenden Bereich, auf dem der Umlenkbogen 4 verfährt. Damit liegen auch in diesem Ausführungsbeispiel die beiden getreckten Trume 3A, 3B (nur z.T. gezeigt) tiefer gegenüber dem Umlenkbogen 4, sodass Schwerkraft einem potentiellen Ausbrechen eines angetriebenen Trums 3A, 3B entgegenwirken kann, der Höhenunterschied beträgt hier ca. 10-20% der Höhe der Trume 3A, 3B entlang der Vertikalen V. Lediglich der mittlere Bereich des Umlenkbogens 4 verläuft jeweils beim Hin- und Herfahren der Energieführungskette 1 im Kontakt mit dem höher liegenden Übergangsbereich 105. Dadurch verfahren die in den Umlenkbogen 4 übergehenden Übergangsabschnitte 109A, 109B der beiden Trume 3A, 3B leicht angehoben. Der Übergangsbereich 105 bildet somit den Höhepunkt der Führungsrinne 100 auf dem nur der mittlere Bereich des Umlenkbogens 4 verfährt, und zwar höher gelegen als die Längsabschnitte 110A, 110B auf den Laufflächen 103A, 103B. Dadurch werden die Übergangsabschnitte 109A, 109B der beiden Trume 3A, 3B berührungslos über die Stufen 108A, 108B gehoben, d.h. unerwünschte Reibung und Verschleiß an den Kanten der Stufen 108A, 108B wird vermieden.

FIG. 10A-10C zeigen nur einen Längsabschnitt bzw. ein Segment 106 als Komponente zum Aufbau der Führungsrinne 100. Das Segment 106 ist stirnseitig mit Halterelementen 107 ausgestattet, die als Verbinder zum Verbinden mit weiteren baugleichen Segmenten 106 zu der Führungsrinne 100 dienen können. Der Rinnenboden 102 kann als einteilig umgeformtes Metallblech herstellt sein, z.B. aus Edelstahl. Die Halterelemente 107 können als Kunststoff-Formteile hergestellt sein. Die Führungsrinne 100 kann als Schutz gegen Verschmutzung eine (nicht gezeigte) Überdachung aufweisen.

Anstelle einer bevorzugten Energieführungskette 1 aus Gliedern 2 mit jeweils zwei gegenüberliegenden Seitenlaschen bzw. Seitenteilen 7,8 wie in FIG.1-9 bzw. FIG.10, kann jede geeignete Bauart einer Energieführung eingesetzt werden. Nicht ausschließlich, aber beispielsweise auch geeignet, sind Energieführungen, bei denen jedes Glied jeweils nur eine Seitenlasche pro Glied entsprechend dem Patent EP1340299B1 bzw. dem Prinzip der Produktserie "SnapChain®", oder dem Patent EP0954710B1 bzw. dem Prinzip der Produktserie "TwisterChain®" der Anmelderin. Die Lehre dieser Patente betreffend die Bauweise der Energieführung wird hiermit einbezogen. Im Fall robuster, kastenartiger Energieführungsketten 1, wie in FIG.2, kann man - im Gegensatz zu FIG.10 - trotz des Höhenunterschieds beim Aspekt aus FIG.2-9 wahlweise auch ein flächiges, spannungsfreies Aufliegen des Umlenkbogens 4 auf dem Boden 22 erzielen. Hierzu man eine Energieführungskette 1 einsetzen, bei welcher die Glieder 2 Gelenkverbindungen bilden mit speziellen, langlochartigen bzw. ovalen Gelenkaufnahmen, die eine Bewegung der Trume 3, 4 und damit des Umlenkbogens 4 seitwärts quer zur Längsrichtung zulassen, d.h. in der hier vorgeschlagenen Anordnung in etwa vertikaler Richtung. Eine solche Energieführungskette 1 offenbart z.B. das Patent EP1108157B1 der Anmelderin, dessen Lehre diesbezüglich (vgl. dort FIG.6) hier ebenfalls einbezogen wird.

### Bezugszeichenliste

### FIG.1A-1C und FIG.2

- 1: Energieführungskette
- 2: Glieder
- 3A: erstes Trum
- 3B: zweites Trum
- 4: Umlenkbogen
- 5: Mitnehmer
- 6: Festpunkt
- 7: unteres Seitenteil
- 8: oberes Seitenteil
- 9: Quersteg
- 10: Innenraum
- 11: innere Hauptseite
- 12: äußere Hauptseite
- 13: Schmalseite
- 20: Führungsrinne
- 21A, 21B: Seitenwände
- 22: Rinnenboden
- 23A, 23B: Laufflächen
- L: Verfahrrichtung
- R: Biegeradius

### FIG.3A-3C

- 1: Energieführungskette
- 2: Glieder
- 3A: erstes Trum
- 3B: zweites Trum
- 4: Umlenkbogen
- 12: Hauptseite
- 30: Führungsrinne
- 31A, 31B: Seitenwände
- 32: Rinnenboden
- 33A: erste Lauffläche (für erstes Trum)
- 33B: zweite Lauffläche (für zweites Trum)
- 34A: erste Leitfläche
- 34B: zweite Leitfläche
- 35: Übergangsbereich
- 36: Formblech
- 37: Halterelemente
- α: spitzer Winkel
- H: Horizontale/Waagerechte
- V: Vertikale/Senkrechte

### FIG.4A-4D

- 1: Energieführungskette
- 3A: erstes Trum
- 3B: zweites Trum
- 4: Umlenkbogen
- 40: Führungsrinne
- 31A, 31B: Seitenwände
- 32: Rinnenboden
- 33A: erste Lauffläche (für erstes Trum)
- 33B: zweite Lauffläche (für zweites Trum)
- 34A: erste Leitfläche
- 34B: zweite Leitfläche
- 35: Übergangsbereich
- 42: Laufrollen
- 44: Stützrollen
- 46: Segmente

### FIG.5A-5C

- 1: Energieführungskette
- 3A: erstes Trum
- 3B: zweites Trum
- 4: Umlenkbogen
- 50: Führungsrinne
- 51A, 51B: Seitenwände
- 52: Rinnenboden
- 53A: erste Lauffläche (für erstes Trum)
- 53B: zweite Lauffläche (für zweites Trum)
- 54A: erste Leitfläche
- 54B: zweite Leitfläche
- 58A, 58B: Stufe

### FIG.6-9

- 3A: erstes Trum
- 3B: zweites Trum
- 60; 70; 80; 90: Führungsrinne
- 61A, 61B; 71A, 71B; 81A, 81B; 91A, 91B;: Seitenwände
- 62; 72; 82; 92: Rinnenboden
- 63A, 63B; 73A, 73B; 83A, 83B; 93A, 93B: Laufflächen
- 64A, 64B; 74A, 74B; 84; 94: Leitfläche

### FIG.10A-10C

- 1: Energieführungskette
- 3A: erstes Trum
- 3B: zweites Trum
- 4: Umlenkbogen
- 100: Führungsrinne
- 101A, 101B: Seitenwände
- 102: Rinnenboden
- 103A: erste Lauffläche (für erstes Trum)
- 103B: zweite Lauffläche (für zweites Trum)
- 104A: erste Leitfläche
- 104B: zweite Leitfläche
- 105: Übergangsbereich
- 107: Halterelemente
- 108A, 108B: Stufe
- 109A, 109B: Übergangsabschnitte (der Trume)
- 110A, 110B: Längsabschnitte (der Trume)

## Patentansprüche

1. Segment (106) einer Führungsrinne (100) für ein Leitungsführungssystem, umfassend:
zwei seitlich gegenüberliegende Seitenwände (101A, 101B) und dazwischen einen
Rinnenboden, wobei eine Energieführung mit einem Umlenkbogen, der einen vorgegebenen Biegeradius hat, seitlich liegend, mit äußeren Hauptseiten beider Trume zum Rinnenboden (102) gewandt, zwischen den Seitenwänden anordenbar ist, wobei der freie Abstand zwischen den Seitenwänden mindestens dem vorgegebenen Außendurchmesser des Umlenkbogens der Energieführung entspricht, so dass jedes Trum jeweils auf einer entsprechenden Lauffläche des Bodens verfahrbar ist;
**dadurch gekennzeichnet, dass**
der Rinnenboden mindestens eine Leitfläche (104A) mit einer Stufe (108A, 108B) und/oder einer Rampe (94) aufweist, welche seitlich angrenzend an der Lauffläche zumindest eines Trums angeordnet ist und einen Höhenunterschied zu dieser Lauffläche bewirkt, welcher vom Umlenkbogen zu überwinden ist, um einem Abweichen dieses Trums aus seiner Soll-Lage entgegenzuwirken.

2. Leitungsführungssystem für mindestens eine Versorgungsleitung, umfassend:
- eine Energieführung mit einer Vielzahl Gliedern, die jeweils gelenkig miteinander verbunden sind, so dass die Energieführung unter Ausbildung eines ersten Trums, eines zweiten Trums sowie eines Umlenkbogens, welcher beide Trume verbindet, hin und her verfahrbar ist, wobei eine Anzahl der Glieder mindestens ein laschenartiges Seitenteil mit einer inneren und äußeren Hauptseite aufweisen;
- eine Führungsrinne umfassend mehrere Segmente nach Anspruch 1;
- wobei die Energieführung seitlich liegend, mit den äußeren Hauptseiten beider Trume zum Rinnenboden gewandt, in der Führungsrinne angeordnet ist, und jedes Trum jeweils auf einer entsprechenden Lauffläche des Rinnenbodens verfahrbar ist.

3. Vorrichtung nach Anspruch 1 oder 2, **dadurch gekennzeichnet, dass** die Rampe im Querschnitt schief zur Waagerechten liegt bzw. die Stufe im Querschnitt im Wesentlichen senkrecht liegt.

4. Vorrichtung nach Anspruch 1 bis 3, **dadurch gekennzeichnet, dass** zumindest der erste Trum zwischen einer Seitenwand der Führungsrinne und der Leitfläche des Rinnenbodens geführt wird.

5. Vorrichtung nach einem der Ansprüche 1 bis 4, **dadurch gekennzeichnet, dass** die Lauffläche zumindest des ersten Trums, vorzugsweise beider Trume, einen im Wesentlichen waagerecht verlaufenden Querschnitt aufweist.

6. Vorrichtung nach einem der Ansprüche 1 bis 5, **dadurch gekennzeichnet, dass** der Rinnenboden eine erste Leitfläche an der Lauffläche des ersten Trums aufweist, welche einem Abweichen des ersten Trums aus seiner Soll-Lage entgegenwirkt, und eine zweite Leitfläche an der Lauffläche des zweiten Trums aufweist, welche einem Abweichen des zweiten Trums aus seiner Soll-Lage entgegenwirkt, wobei insbesondere die Laufflächen seitlich außen an die Seitenwände angrenzend verlaufen und die mindestens eine Leitfläche bzw. beide Leitflächen zwischen den Laufflächen vorgesehen ist bzw. sind.

7. Vorrichtung nach einem der Ansprüche 1 bis 6, insbesondere nach Anspruch 6, **dadurch gekennzeichnet, dass** die Leitfläche(n) seitlich an einer im Querschnitt konvex gewölbten Verbindungsfläche, insbesondere bogenförmig gekrümmten Verbindungsfläche, zwischen den Laufflächen beider Trume ausgebildet ist bzw. sind.

8. Vorrichtung nach einem der Ansprüche 1 bis 7, **dadurch gekennzeichnet, dass** Laufrollen oder Stützrollen vorgesehen sind, mittels welchen zumindest das erste Trum an der Führungsrinne rollend abgestützt ist.

9. Vorrichtung nach einem der Ansprüche 1 bis 8, **dadurch gekennzeichnet, dass** jede Leitfläche einen Höhenunterschied überbrückt, der im Bereich von 5% bis 50% der Höhenabmessung der liegend angeordneten Energieführung beträgt, und die Seitenwände vorzugsweise eine Höhenabmessung von mindestens 75%, vorzugsweise mindestens 100% der Höhenabmessung der liegend angeordneten Energieführung aufweisen.

10. Vorrichtung nach einem der Ansprüche 1 bis 9, **dadurch gekennzeichnet, dass** die Seitenwände und der Rinnenboden zwecks linearer Führung der Trume linear erstreckt sind, sodass jedes Trum jeweils auf einer entsprechenden Lauffläche des Bodens im Wesentlichen linear verfahrbar ist.

11. Vorrichtung nach einem der Ansprüche 1 bis 10, **dadurch gekennzeichnet, dass** die Energieführung mit Vorspannung ausgeführt ist und der freie Abstand zwischen den Seitenwänden grösser ist, als der vorgegebene Außendurchmesser des Umlenkbogens.

12. Vorrichtung nach einem der Ansprüche 1 bis 11, **dadurch gekennzeichnet, dass** der Rinnenboden ein geformtes Metallblechprofil aufweist, welches oberseitig die Laufflächen und die mindestens eine Leitfläche aufweist, und dass der Rinnenboden einteilig mit den Seitenwänden hergestellt ist.

13. Vorrichtung nach einem der Ansprüche 1 bis 12, **dadurch gekennzeichnet, dass** der Rinnenboden mit mindestens einer Leitfläche ausgestattet ist, welche eine Stufe umfasst, die einem Abweichen des ersten Trums von seiner Lauffläche entgegenwirkt und welche einen vorbestimmten Höhenunterschied zur Lauffläche des ersten Trums bewirkt, der beim Verfahren durch den Umlenkbogen überwunden wird,
insbesondere **dadurch gekennzeichnet, dass** die mindestens eine Leitfläche ferner eine konvex gewölbte Fläche umfasst, die an die Stufe anschließend ausgebildet ist und einen Teil des Höhenunterschieds bewirkt, und der mittlere Bereich des Umlenkbogens höhenversetzt gegenüber der Höhenlage beider auf den Laufflächen geführten Trume auf der Leitfläche verfährt; wobei vorzugsweise
- die Stufe so angeordnet ist, dass das bewegte Trum zwischen einer Seitenwand der Führungsrinne und der Stufe geführt ist; oder
- die Lauffläche zumindest des ersten Trums, vorzugsweise beider Trume, einen im Wesentlichen waagerecht verlaufenden Querschnitt aufweist und die Laufflächen als Vertiefungen im Rinnenboden ausgeführt sind, die an die Seitenwände angrenzen.

14. Führungsrinne für eine Energieführung umfassend mehrere Segmente nach Anspruch 1.

15. Lineare Portaleinheit für flexible Fertigungsanlagen, umfassend mindestens eine Linearachse und einer an dieser verfahrbaren Handhabungsvorrichtung, **dadurch gekennzeichnet, dass** die Portaleinheit ein Leitungsführungssystem nach Anspruch 2 umfasst, welches zur Versorgung an die Handhabungsvorrichtung angeschlossen ist.

## Claims

1. Segment (106) of a guide trough (100) for a line guiding system, including:
two laterally opposite side walls (101A, 101B) and a trough floor therebetween, wherein an energy guide, having a deflection curve with a predetermined bending radius and
lying on the side, with outer main sides of both strands facing towards the trough floor (102), is arrangeable between the side walls, wherein the clear distance between the side walls corresponds to at least the predetermined outside diameter of the deflection curve, so that each strand is respectively displaceable on a corresponding bearing surface of the floor;
**characterized in that**
the trough floor comprises at least one guide surface (104A) with a step (108A, 108B) and/or a ramp (94), which guide surface is arranged laterally adjacent to the bearing surface of at least one strand and causes a height difference to this bearing surface, which is to be overcome by the deflection curve, in order to counteract a deviation of this strand out of its target location.

2. Line guiding system for at least one supply line, including:
- an energy guide with a plurality of members, which are respectively connected to one another in an articulated manner, so that the energy guide, in the configuration of a first strand, a second strand, as well as a deflection curve which connects both strands, is displaceable back and forth, wherein a number of the members comprise at least one link-like side part with an inner main side and an outer main side;
- a guide trough comprising multiple segments according to claim 1;
- wherein the energy guide is arranged lying on the side in the guide trough, with the outer main sides of both strands facing the trough floor, and each strand is respectively displaceable on a corresponding bearing surface of the trough floor.

3. Device according to claim 1 or 2, **characterized in that** the ramp, cross-sectionally, lies obliquely to the horizontal, or the step, cross-sectionally, lies substantially vertically.

4. Device according to claims 1 to 3, **characterized in that** at least the first strand is guided between a side wall of the guide trough and the guide surface of the trough floor.

5. Device according to one of claims 1 to 4, **characterized in that** the bearing surface of at least the first strand, preferably of both strands, has a substantially horizontally-extending cross-section.

6. Device according to one of claims 1 to 5, **characterized in that** the trough floor comprises a first guide surface on the bearing surface of the first strand, which guide surface counteracts a deviation of the first strand out of its target location, and comprises a second guide surface on the bearing surface of the second strand, which guide surface counteracts a deviation of the second strand out of its target location, wherein in particular the bearing surfaces extend laterally and externally bordering on the side walls, and the at least one guide surface or both guide surfaces is or are provided between the bearing surfaces.

7. Device according to one of claims 1 to 6, in particular according to claim 6, **characterized in that** the guide surface(s) is or are formed laterally on a cross-sectionally convexly-curved connecting surface, in particular an arcuately-bent connecting surface, between the bearing surfaces of both strands.

8. Device according to one of claims 1 to 7, **characterized in that** bearing rolls or support rolls are provided, by means of which at least the first strand is rollingly supported on the guide trough.

9. Device according to one of claims 1 to 8, **characterized in that** each guide surface bridges a height difference, which amounts to in the range of 5% to 50% of the height dimension of the energy guide arranged in a lying manner, and the side walls preferably have a height dimension of at least 75%, preferably at least 100% of the height dimension of the energy guide arranged in a lying manner.

10. Device according to one of claims 1 to 9, **characterized in that** the side walls and the trough floor extend linearly for the purpose of linearly guiding the strands, so that each strand is respectively substantially linearly-displaceable on a corresponding bearing surface of the floor.

11. Device according to one of claims 1 to 10, **characterized in that** the energy guide is advantageously configured with a pre-stress, and the clear distance between the side walls is greater than the predetermined outer diameter of the deflection curve.

12. Device according to one of claims 1 to 11, **characterized in that** the trough floor comprises a shaped sheet-metal profile, which, on the upper side, comprises the bearing surfaces and the at least one guide surface and that the trough floor is manufactured in one piece with the side walls.

13. Device according to one of claims 1 to 12, **characterized in that** the trough floor is equipped with at least one guide surface, which includes a step that counteracts a deviation of the first strand from its bearing surface, and which step causes a predetermined height difference to the bearing surface of the first strand, which height difference is overcome by the deflection curve when displaced,
in particular **characterized in that** the at least one guide surface moreover includes a convexly-curved surface, which is configured to adjoin the step and causes part of the height difference, and the middle region of the deflection curve displaces on the guide surface in a manner height-offset relative to the height position of both strands guided on the bearing surfaces; wherein preferably
- the step is arranged such that the moved strand is guided between a side wall of the guide trough and the step; or
- the bearing surface, at least of the first strand, preferably of both strands, has a substantially horizontally-extending cross-section, and the bearing surfaces are formed as recesses in the trough floor, which border on the side walls.

14. Guide trough for an energy guide, including multiple segments according to claim 1.

15. Linear portal unit for flexible production plants, including at least one linear axis and a handling device displaceable thereon, **characterized in that** the portal unit includes a line guiding system according to claim 2, which is connected, for the supply, to the handling device.

## Revendications

1. Segment (106) d'une goulotte de guidage (100) pour un système de guidage de ligne, comprenant:
deux parois latérales (101A, 101B) opposées latéralement et
un fond de goulotte entre elles, dans lequel un porte-câbles avec un arc de renvoi ayant un rayon de courbure prédéterminé peut être disposé de manière latéralement couchée entre les parois latérales, avec des côtés principaux extérieurs des deux brins tournés vers le fond de goulotte (102), dans lequel la distance libre entre les parois latérales correspond au moins au diamètre extérieur prédéterminé du coude de déviation du porte-câbles, de sorte que chaque brin peut respectivement se déplacer sur une surface de roulement correspondante du fond;
**caractérisé en ce que**
le fond de goulotte présente au moins une surface de guidage (104A) avec un gradin (108A, 108B) et/ou une rampe (94) qui est disposé(e) latéralement à côté de la surface de roulement d'au moins un brin et provoque une différence de hauteur par rapport à cette surface de roulement qui doit être surmontée par l'arc de renvoi afin de s'opposer à une déviation de ce brin par rapport à sa position de consigne.

2. Système de guidage de ligne pour au moins un câble d'alimentation, comprenant:
- un porte-câbles ayant une pluralité de maillons, dont chacun est interconnecté de manière articulée de sorte que le porte-câbles est mobile en va-et-vient sous formation d'un premier brin, d'un deuxième brin et d'un arc de renvoi reliant les deux brins, un certain nombre des maillons ayant au moins une partie latérale en forme de patte ayant un côté principal intérieur et extérieur;
- une goulotte de guidage comprenant une pluralité de segments selon la revendication 1 ;
- dans lequel le porte-câbles est disposé de manière latéralement couché dans la goulotte de guidage, les côtés principaux extérieurs des deux brins faisant face au fond de goulotte, et chaque brin est mobile sur une surface de roulement respective du fond de goulotte.

3. Système selon la revendication 1 ou 2, **caractérisé en ce que** la rampe est situées de manière inclinée en section transversale par rapport à l'horizontale ou le gradin est situé de manière sensiblement verticale en section transversale.

4. Système selon les revendications 1 à 3, **caractérisé en ce qu'**au moins le premier brin est guidé entre une paroi latérale de la goulotte de guidage et la surface de guidage du fond de la goulotte.

5. Système selon l'une quelconque des revendications 1 à 4, **caractérisé en ce que** la surface de roulement d'au moins un brin, de préférence des deux brins, présente une section transversale sensiblement horizontale.

6. Système selon l'une des revendications 1 à 5, **caractérisé en ce que** le fond de la goulotte présente une première surface de guidage sur la surface de roulement du premier brin, qui s'oppose à une déviation du premier brin par rapport à sa position de consigne, et une deuxième surface de guidage sur la surface de roulement du deuxième brin, qui s'oppose à une déviation du deuxième brin par rapport à sa position de consigne, les surfaces de roulement s'étendant en particulier latéralement à l'extérieur au voisinage des parois latérales et l'au moins une surface de guidage ou les deux surfaces de guidage étant prévues entre les surfaces de roulement.

7. Système selon l'une des revendications 1 à 6, en particulier selon la revendication 6, **caractérisé en ce que** la ou les surfaces de guidage sont formées latéralement sur une surface de liaison à section en forme convexe, en particulier à section arquée, entre les surfaces de roulement des deux brins.

8. Système selon l'une des revendications 1 à 7, **caractérisé en ce qu'**il est prévu des rouleaux ou des rouleaux d'appui, au moyen desquels au moins le premier brin est soutenu de manière roulante sur la goulotte de guidage.

9. Système selon l'une des revendications 1 à 8, **caractérisé en ce que** chaque surface de roulement ponte une différence de hauteur qui est comprise entre 5 % et 50 % de la dimension en hauteur du porte-câbles disposé de manière horizontalement couché, et les parois latérales ont de préférence une dimension en hauteur d'au moins 75 %, de préférence d'au moins 100 % de la dimension en hauteur du porte-câbles disposé de manière horizontalement couché.

10. Système selon l'une des revendications 1 à 9, **caractérisé en ce que** les parois latérales et le fond de la goulotte s'étendent linéairement pour guider linéairement les brins, de sorte que chaque brin est mobile sensiblement linéairement sur une surface de roulement respective du fond.

11. Système selon l'une des revendications 1 à 10, **caractérisé en ce que** le porte-câbles est sollicité et la distance libre entre les parois latérales est supérieure au diamètre extérieur prédéterminé de l'arc de renvoi.

12. Système selon l'une des revendications 1 à 11, **caractérisé en ce que** le fond de la goulotte comporte une tôle profilée métallique façonnée qui présente sur le dessus les surfaces de roulement et ladite au moins une surface de guidage, et **en ce que** le fond de la goulotte est fabriqué en une seule pièce avec les parois latérales.

13. Système selon l'une quelconque des revendications 1 à 12, **caractérisé en ce que** le fond de la goulotte est pourvu d'au moins une surface de guidage qui présente un gradin s'opposant à une déviation du premier brin par rapport à sa surface de roulement et provoquant une différence de hauteur prédéterminée par rapport à la surface de roulement du premier brin qui est surmontée lors du parcours de l'arc de renvoi,
caractérisé en particulier par le fait qu'au moins une surface de guidage comprend en outre une surface à courbure convexe qui est formée adjacente au gradin et qui réalise une partie de la différence de hauteur, et la zone centrale de l'arc de renvoi se déplace sur la surface de guidage avec un décalage en hauteur par rapport à la position en hauteur des deux brins guidés sur les surfaces de roulement;
dans lequel de préférence
- le gradin est disposé de manière à ce que le brin mobile soit guidé entre une paroi latérale de la goulotte de guidage et le gradin;
ou
- la surface de roulement d'au moins le premier brin, de préférence des deux brins, a une section transversale essentiellement horizontale et les surfaces de roulement sont conçues comme des creux dans le fond de la goulotte qui sont adjacents aux parois latérales.

14. Goulotte de guidage pour un porte-câbles, comprenant plusieurs segments selon la revendication 1.

15. Unité de portique linéaire pour équipement de fabrication flexible, comprenant un axe linéaire et un dispositif de manipulation mobile sur celui-ci, **caractérisée en ce que** l'unité de portique comprend un système de guidage de ligne selon la revendication 2, qui est connecté au dispositif de manipulation pour l'alimentation.
